# EUROPÄISCHE PATENTSCHRIFT

(11) **EP 0 930 187 B1**
(45) Veröffentlichungstag und Bekanntmachung des Hinweises auf die Patenterteilung: **02.05.2003**
(21) Anmeldenummer: 99100840.0
(22) Anmeldetag: 19.01.1999
(51) Int. Cl.: B60J 7/185

(54) **Verriegelungseinrichtung zum Festlegen eines Verdecks**
Locking device for securing a soft top
Système de verrouillage pour la fixation d'une capote

(30) Priorität: 20.01.1998 DE 19801852
(43) Veröffentlichungstag der Anmeldung: 21.07.1999
(73) Patentinhaber: CTS Fahrzeug-Dachsysteme GmbH, 21079 Hamburg (DE)
(72) Erfinder: Schumacher, Thorsten, 22769 Hamburg (DE); Mangold, Artur, 72172 Sülz-Mühlheim (DE); Valett, Ralf, 22145 Hamburg (DE); Semke, Klaus, 22880 Wedel (DE)
(74) Vertreter: Müller, Gottfried

(56) Entgegenhaltungen:
- CH-A- 134 816
- DE-A- 3 415 619
- US-A- 2 305 715

## Beschreibung

Die Erfindung bezieht sich auf eine Verriegelungseinrichtung zum Festlegen eines Verdecks an einem Windschutzscheibenrahmen eines Fahrzeuges gemäß dem, in US 2305715 A offenbarten Oberbegriff des Patentanspruches 1.

Aus der EP 0 560 027 B1 geht eine ähnliche weitere Verriegelungseinrichtung zum Festlegen eines Verdecks an einem Windschutzscheibenrahmen hervor, wobei die seitlich außenliegenden Verriegelungsorgane über ein durchgehendes querverlaufendes Verbindungselement miteinander gekoppelt sind. Der mittig angeordnete Verschlußgriff ist starr mit dem Verbindungselement verbunden. Dieser Anordnung haftet der Nachteil an, daß dieser Verschlußgriff, wenn er beim Entriegeln und Verriegeln günstige Hebelarme aufweisen soll, in seiner hochgeschwenkten Verriegelungsstellung relativ weit in den Kopfaufschlagbereich der vorderen Fahrzeuginsassen hineinragt, wodurch unter ungünstigen Bedingungen Verletzungen bei einem Kopfaufprall auftreten können. Darüber ist dieser Verschlußgriff in seiner hochgeschwenkten Stellung nicht zusätzlich gegen Öffnen gesichert.

Aufgabe der Erfindung ist es, eine Verriegelungseinrichtung der eingangs genannten Gattung so weiterzubilden, daß der Verschlußgriff beim Entriegeln und Verriegeln des Verdecks günstige Hebelarme aufweist und somit mit geringem Kraftaufwand verschwenkbar ist, wogegen der Verschlußgriff in der Verriegelungsstellung nicht in den Kopfaufschlagbereich hineinragen soll.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die teleskopierbare Ausbildung des Verschlußgriffes beim Verriegeln und Entriegeln des Verdecks lange, günstige Hebelverhältnisse vorliegen, wodurch die Betätigungskräfte entsprechend niedrig sind. Durch das Verschieben des Verschlußgriffes nach vorne in Richtung Windschutzscheibenrahmen wird die Kopffreiheit der vorderen Fahrzeuginsassen bei geschlossenem und verriegeltem Verdeck wesentlich verbessert. Zudem wird eine Sekundärverriegelung des Verschlußgriffes geschaffen, da dieser nur in der ausgezogenen Betätigungsstellung verschwenkbar ist, nicht jedoch in der eingeschobenen Ruhestellung. Sämtliche Bauteile der Verriegelungseinrichtung lassen sich einfach und kostengünstig herstellen.

Die den Verriegelungsorganen zugeordnete Viergelenkkinematik sorgt in der Totpunktstellung für eine Primärverriegelung. Zum Verriegeln des Verdecks greift der Verschlußhaken über eine am Windschutzscheibenrahmen angeordnete querverlaufende Rolle. Verschlußhaken und Rolle stellen ein Kurvengetriebe dar, über das die zum Aufbau des Dichtungsdrucks und zur Überwindung der Verdeckspannung erforderlichen Kräfte in das System Verdeck / Fahrzeug eingeleitet werden. Der aus der Übertotpunktkinematik resultierende progressive Kraftanstieg entspricht sehr gut dem Kraftaufwand am vorderen Verdeckabschnitt, der im Berührungspunkt mit der Dichtung stark ansteigt. Die Information über den Verriegelungszustand erfolgt über einen am Verdeckverschlußunterteil untergebrachten Reedsensor. Der dazu gehörende Magnet ist am Gehäuse der seitlich außenliegenden Verriegelungsorgane befestigt.

Ein Ausführungsbeispiel der Erfindung ist in der Zeichnung dargestellt und wird im folgenden näher erläutert.

Es zeigt
- Fig. 1: eine Teilseitenansicht eines Personenkraftwagens mit einem Faltverdeck,

- Fig. 2: eine Teildraufsicht auf die linke Hälfte der dem Faltverdeck zugeordneten Bauteile einer Verriegelungseinrichtung für das Faltverdeck, wobei die Verriegelungseinrichtung in Schließstellung dargestellt ist,
- Fig. 3: die linke Hälfte der dem Faltverdeck zugeordneten Bauteile der Verriegelungseinrichtung in Explosionsdarstellung,
- Fig. 4: eine Ansicht in Pfeilrichtung R der Fig. 2 auf die Verriegelungseinrichtung,
- Fig. 5: einen Schnitt nach der Linie V-V der Fig. 2 in größerer Darstellung und um 90° gedreht, wobei der Verschlußgriff seine eingefahrene Ruhestellung einnimmt,
- Fig. 6: einen Schnitt ähnlich Fig. 5, wobei der Verschlußgriff seine ausgefahrene Betätigungsstellung einnimmt,
- Fig. 7: einen Schnitt ähnlich Fig. 6, wobei der ausgefahrene Verschlußgriff in seine Öffnungsstellung verschwenkt ist,
- Fig. 8: eine perspektivische Ansicht auf ein seitlich außenliegendes Verriegelungsorgan in Schließstellung der Verriegelungseinrichtung,
- Fig. 9: eine weitere perspektivische Ansicht auf den Verschlußhaken und die Bauteile der Viergelenkanordnung zur Ansteuerung des Verschlußhakens in Verrieglungsstellung,
- Fig. 10: eine Seitenansicht auf den Verschlußhaken und die Bauteile der Viergelenkanordnung in Verriegelungsstellung des Verschlußhakens,
- Fig. 11: eine Seitenansicht auf den Verschlußhaken und die Bauteile der Viergelenkanordnung in Entriegelungsstellung des Verschlußhakens,
- Fig. 12: eine perspektivische Ansicht auf die am Windschutzscheibenrahmen angebrachte Aufnahme der Verriegelungseinrichtung und
- Fig. 13: einen Vertikalschnitt durch die Aufnahme und eine Rosette der Verkleidung.

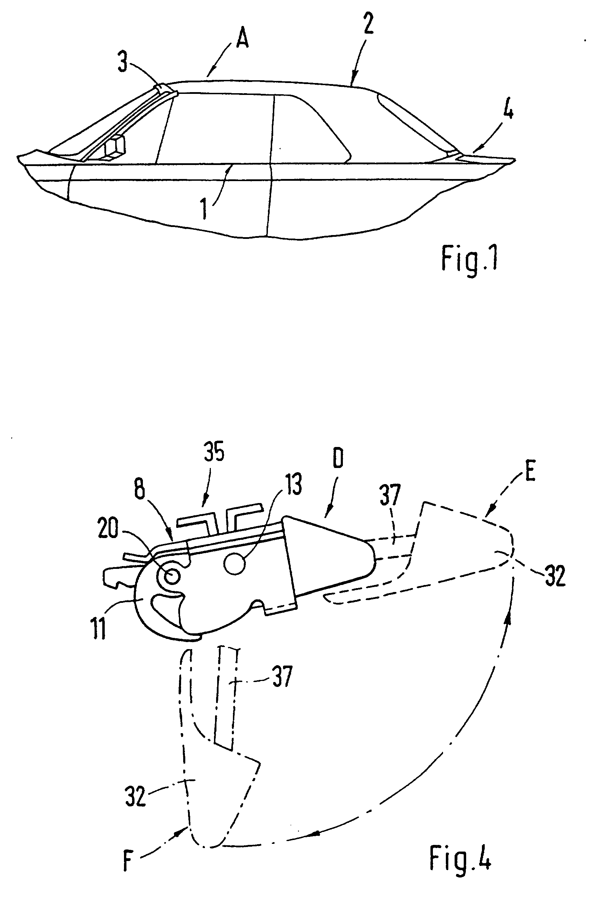

Der in Fig. 1 dargestellte Teilbereich eines Personenkraftwagens weist oberhalb einer Gürtellinie 1 ein Verdeck 2 auf, das sich in seiner Schließstellung A zwischen einem Windschutzscheibenrahmen 3 und einem Heckbereich 4 erstreckt und lösbar am Windschutzscheibenrahmen 3 in Lage gehalten ist.

Das im Ausführungsbeispiel als Faltverdeck ausgebildete Verdeck 2 setzt sich aus einem am Aufbau schwenkbar angelenkten Verdeckgestell und einem vom Verdeckgestell getragenen elastischen Verdeckbezug zusammen. Vom Verdeckgestell ist lediglich ein benachbart dem Windschutzscheibenrahmen 3 angeordneter vorderer, formsteifer Verdeckabschnitt 5 dargestellt, der über nicht näher gezeigte Lenker mit dem übrigen Verdeckgestell gelenkig verbunden ist. Der durch ein Druckgußteil aus einer Leichtmetallegierung gebildete, relativ großflächige vordere Verdeckabschnitt 5 kann - in der Draufsicht gesehen - etwa rechteckförmig oder U-förmig ausgebildet sein. Zur lösbaren Fixierung des Verdecks 2 am Windschutzscheibenrahmen 3 ist eine Verriegelungseinrichtung 6 vorgesehen, die sich im wesentlichen aus einer zentralen Betätigungseinrichtung 7, zwei seitlich außenliegenden Verriegelungsorganen 8 und zwei am Windschutzscheibenrahmen 3 angeordneten Aufnahmen 9 zusammensetzt.

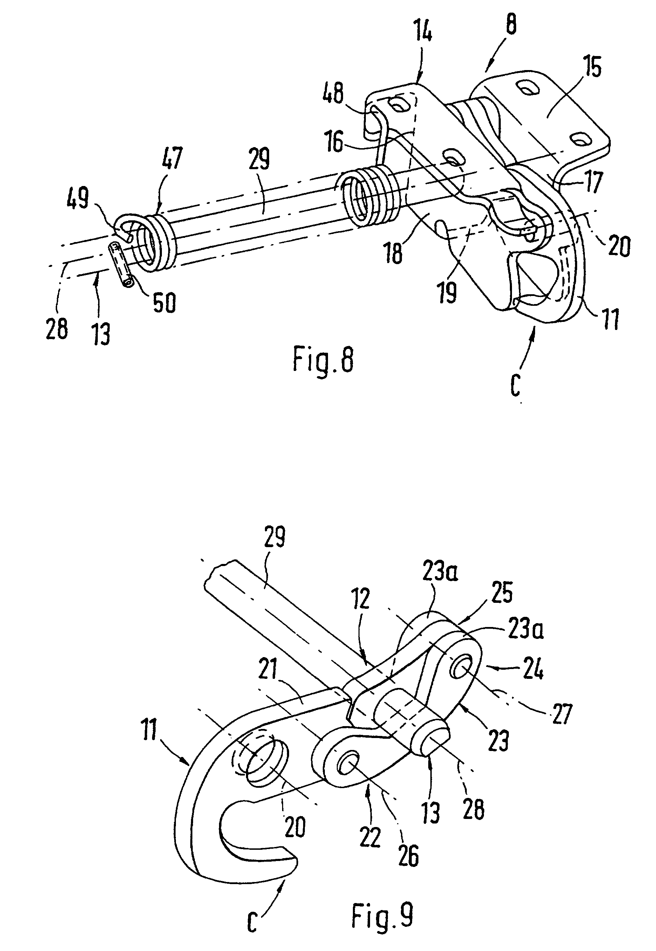

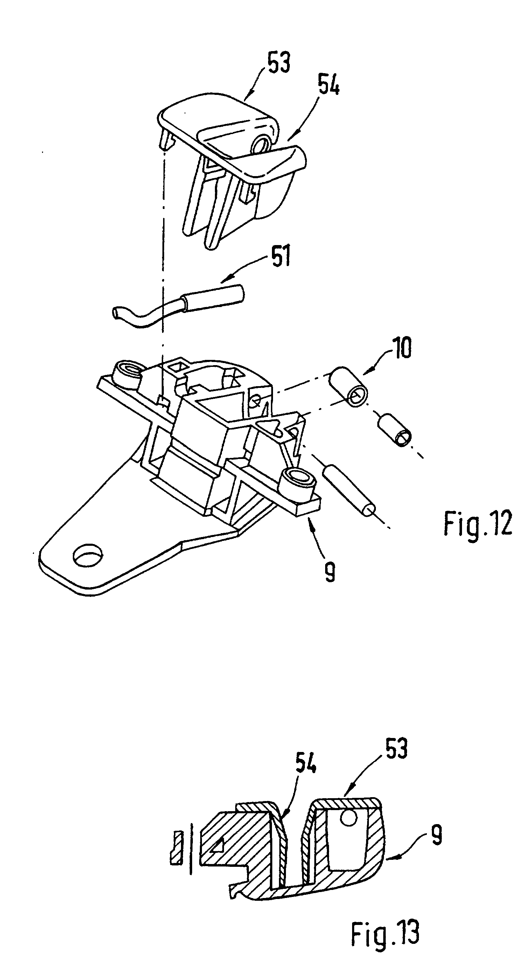

Die beiden seitlich außenliegend am Windschutzscheibenrahmen 3 befestigten Aufnahmen 9 werden jeweils durch ein in Fig. 12 näher dargestelltes Verdeckverschlußunterteil gebildet, an dessen Gehäuse ein querverlaufendes zylindrisches Element 10 vorgesehen ist, das in Verrieglungsstellung C der Verriegelungseinrichtung 6 von einem Verschlußhaken 11 der Verriegelungsorgane 8 umgriffen wird (Fig. 9). Das etwa horizontal ausgerichtete Element 10 jeder Aufnahme 9 wird im Ausführungsbeispiel durch eine auf einen zylindrischen Bolzen aufgesetzte drehbare Rolle gebildet.

Jedes seitlich außenliegend am vorderen Verdeckabschnitt 5 angeordnete Verriegelungsorgan 8 weist einen sich in Fahrzeuglängsrichtung erstreckenden Verschlußhaken 11, der über eine Viergelenkanordnung 12 mit einem querverlaufenden Verbindungselement 13 zusammenwirkt.

Gemäß Fig. 8 umfaßt jedes Verriegelungsorgan 8 ein Gehäuse 14, wobei horizontal ausgerichtete beabstandete Wandabschnitte 15,16 des Gehäuses 14 mittels Schrauben am darüberliegenden vorderen Verdeckabschnitt 5 festlegbar sind. Von den beiden obenliegenden horizontalen Wandabschnitten 15, 16 sind jeweils aufrechte Stege 17, 18 nach unten hin weggeführt, wobei die beiden Stege 17, 18 abschnittsweise über einen querverlaufenden Verbindungssteg 19 miteinander verbunden sind. Die beiden Stege 17, 18 sind parallel zueinander und zum dazwischenliegenden, sich in Fahrzeuglängsrichtung erstreckenden Verschlußhaken 11 ausgerichtet. Der Verschlußhaken 11 ist über eine querverlaufende, ortsfeste Drehachse 20 drehbar mit beiden Stegen 17, 18 verbunden. Ein über die Drehachse 20 hinaus nach hinten ragender Arm 21 des Verschlußhakens 11 ist an seinem freien Ende mit einem Ende 22 eines bogenförmigen Koppelgliedes 23 drehbar verbunden, wobei sich das Koppelglied 23 aus zwei gleichartigen, den Verschlußhaken 11 zwischen sich aufnehmenden Bauteilen 23a zusammensetzt. Das andere Ende 24 des Koppelgliedes 23 ist mit einem eine geringe Länge aufweisenden Kurbelarm 25 drehbar verbunden, der sich wiederum zwischen beiden Bauteilen 23a des Koppelgliedes 23 erstreckt (Fig. 9 bis 11). Das dem Koppelglied 23 abgewandte Ende des Kurbelarmes 25 ist formschlüssig mit dem querverlaufenden Verbindungselement 13 verbunden. Hierzu ist das zylindrische Verbindungselement 13 an seinem außenliegenden Ende örtlich abgeflacht. Die beiden querverlaufenden Drehachsen 26, 27 des Koppelgliedes 23 sowie die querverlaufende Drehachsen 20, 28 des Verschlußhakens 11 und des Verbindungselementes 13 bilden die vier Eckpunkte der Viergelenkanordnung 12.

Das freie Ende des Verschlußhakens 11 ist in Verriegelungsstellung C der Verriegelungseinrichtung 6 dem Windschutzscheibenrahmen 3 abgekehrt und zeigt nach hinten. Die seitlichen Verriegelungsorgane 8 sind jeweils als Viergelenkverschlüsse ausgebildet (Übertotpunktlage in der Verriegelungsstellung C).

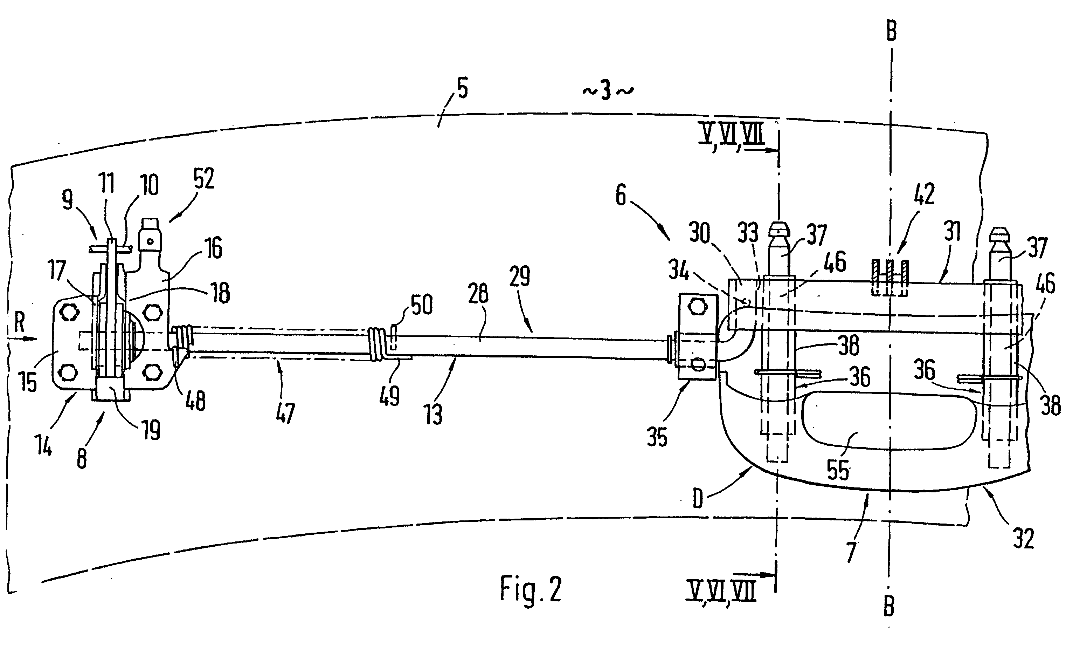

Erfindungsgemäß wird das querverlaufende Verbindungselement 13 durch zwei fluchtende, drehbar gelagerte und benachbart einer Fahrzeugmittelängsebene B-B abgewinkelte Torsionsstangen 29 gebildet, wobei die den Verriegelungsorganen 8 zugekehrten Enden verdrehfest mit den Kurbelarmen 25 der Viergelenkanordnung 12 verbunden sind. Die beiden abgewinkelten inneren Enden 30 der Torsionsstangen 29 sind mit einer zwischengeschalteten Verschlußbrücke 31 kraftübertragend verbunden (Fig. 2), wobei die Verschlußbrücke 31 einen Verschlußgriff 32 aufnimmt. Die Verschlußbrücke 31 und der Verschlußgriff 32 bilden die zentrale Betätigungseinrichtung 7. Die abgewinkelten inneren Enden 30 der Torsionsstangen 29 sind etwa rechtwinkelig zur Quererstreckung der Torsionsstangen 29 ausgerichtet. In Verriegelungsstellung C der Verriegelungseinrichtung 6 zeigen die freien Enden der abgewinkelten Enden 30 der Torsionsstangen 29 nach vorne in Richtung Windschutzscheibenrahmen 3. Die abgewinkelten Enden 30 sind in korrespondierende zylindrische Aufnahmen 33 der Verschlußbrücke 31 eingesteckt und durch aufrechte Stifte 34 mit der Verschlußbrücke 31 fest verbunden. Jede Torsionsstange 29 ist an beiden Stegen 17, 18 des außenliegenden Gehäuses 14 des Verriegelungsorganes 8 und an einem innenliegenden, benachbart der Verschlußbrücke 31 am Verdeckabschnitt 5 befestigten Lagerbock 35 drehbar aufgenommen.

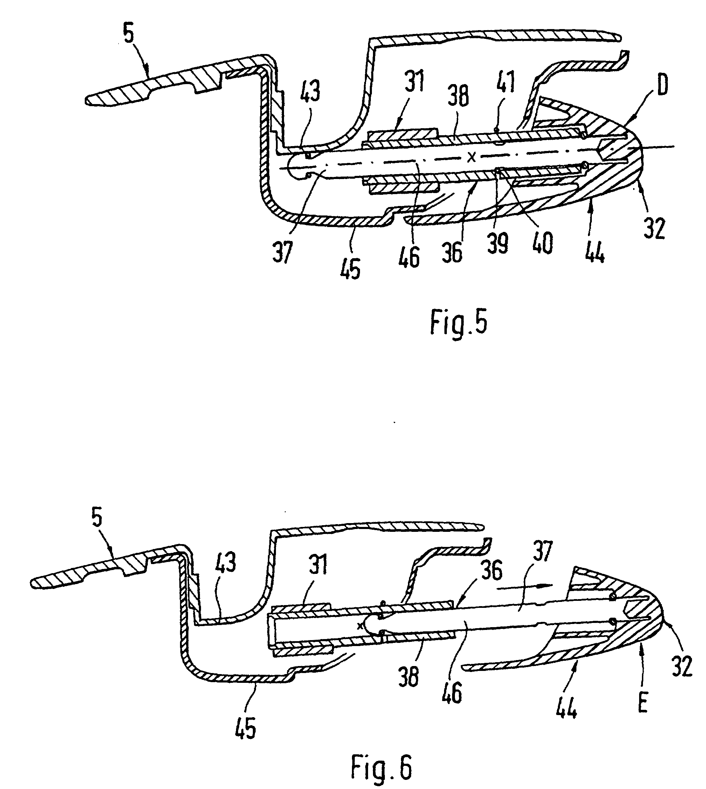

Erfindungsgemäß ist der Verschlußgriff 32 in X-Richtung (Fahrzeuglängsrichtung) teleskopierbar (Fig.5 und 6). Hierzu sind an der querverlaufenden Verschlußbrücke 31 zwei langgestreckte, sich in Fahrzeuglängsrichtung erstreckende rohrförmige Führungen 36 vorgesehen, in denen zylindrische Griffstangen 37 des Verschlußgriffs 32 verschiebbar gelagert sind (Teleskopeinrichtung). Die Führungen 36 sind parallel zu den außenliegenden Aufnahmen 33 für die angewinkelten Enden 30 der Torsionsstangen 29 ausgebildet und werden durch langgestreckte Rohre 38 gebildet. Die Rohre 38 sind in korrespondierende Öffnungen der Verschlußbrücke 31 eingesetzt und werden jeweils an ihrem vorderen, geringfügig vorstehenden Ende aufgeweitet, so daß eine formschlüssige Verbindung mit der Verschlußbrücke 31 gegeben ist. Das hintere Ende jedes Rohres 38 überragt die Verschlußbrücke 31 nach hinten hin.

In einem mittleren Bereich der Längserstreckung beider Rohre 38 ist an jedem Rohr 38 ein querverlaufender Schlitz 39 vorgesehen, in den ein Schenkel 40 einer auf das Rohr 38 aufgesteckten Rastfeder 41 hineinragt. Jede Rastfeder 41 begrenzt die Ausziehbewegung der Griffstangen 37 des Verschlußgriffes 32.

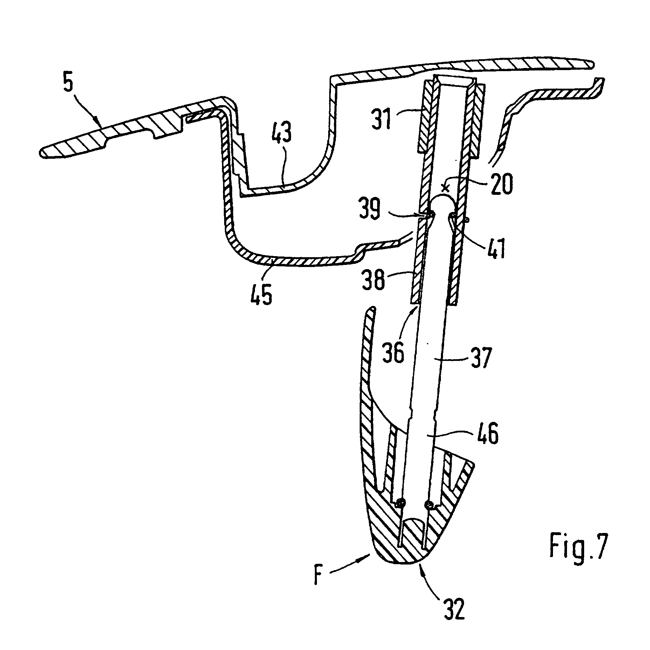

Am vorderen Verdeckabschnitt 5 ist im Bereich der Fahrzeugmittellängsebene B-B ein winkelförmiger Anschlag 42 angeformt (Fig.2), der die Lage der Verschlußbrücke 31 bzw. der Betätigungseinrichtung 7 in der Verriegelungsstellung C festlegt. In dieser Stellung liegt die Verschlußbrücke 31 an einer Stützfläche des darüberliegenden Anschlags 42 an. In der eingefahrenen Ruhestellung D des Verschlußgriffs 32 verlaufen die beiden aus den Führungen 36 der Verschlußbrücke 31 nach vorne vorstehenden Griffstangen 37 des Verschlußgriffes 32 mit geringem Höhenabstand zu vertikalen Stützstegen 43 des vorderen Verdeckabschnitts 5, so daß in dieser Stellung der Verschlußgriff 32 nicht nach unten in eine Öffnungsstellung F verschwenkbar ist (Fig. 5). Erst nach dem linearen Verlagern des Verschlußgriffes 32 durch eine längsgerichtete, axiale Ausziehbewegung von der Ruhestellung D in eine ausgefahrene Betätigungsstellung E (Fig. 6) läßt sich der Verschlußgriff 32 nach unten vorne in eine Öffnungsstellung F der Verriegelungseinrichtung 6 verschwenken (Fig. 7). In der eingefahrenen Ruhestellung D des Verschlußgriffs 32 verläuft die Unterseite 44 des Griffabschnitts konturbündig zur vorgelagerten Kontur einer auf den vorderen Verdeckabschnitt 5 aufgesetzten inneren Verkleidung 45. Zum einfachen Umgreifen des Verschlußgriffes 32 ist am Griffabschnitt eine etwa rechteckförmige Ausnehmung 55 (Fig. 2) ausgebildet.

In der Verriegelungsstellung C verlaufen die Mittelachsen 46 der beiden Griffstangen 37 bzw. der Führungen 36 annähernd horizontal oder leicht nach hinten oben ansteigend. Zum Freischwenken des Verschlußhakens 11 wird der Verschlußgriff 32 um etwa 100° nach unten bzw. vorne geschwenkt. An zumindest einer Torsionsstange 29 ist eine koaxial angeordnete Drehfeder 47 vorgesehen (Fig. 8), die sich mit einem Ende 48 am außenliegenden Gehäuse 14 und mit dem anderen Ende 49 an einem vorstehenden radialen Stift 50 der Torsionsstange 29 abstützt. Durch die Drehfeder 47 wird die Torsionsstange 29 derart beaufschlagt, daß der Verschlußgriff 32 nach dem manuellen Loslassen von der Offenstellung F selbsttätig wieder nach oben hinten in seine Betätigungsstellung E zurückschwenkt.

Die Zentrierung zwischen Aufbau und Verdeck 2 beim Schließen des Verdecks 2 erfolgt dergestalt, daß an einer auf das Verdeckverschlußunterteil, aufgesetzten Rosette 53 ein konisch ausgebildeter Aufnahmebereich 54 ausgebildet ist, der den längsgerichteten Verschlußhaken 11 beim Absenken des Verdecks 2 aufnimmt und somit in Y-Richtung, d.h. quer zur Fahrzeuglängsrichtung positioniert. Die Verriegelung wird in X-, Y- und Z-Richtung ohne weitere zusätzliche Elemente (z.B. Zentrierzapfen) positioniert (Fig. 12 und 13).

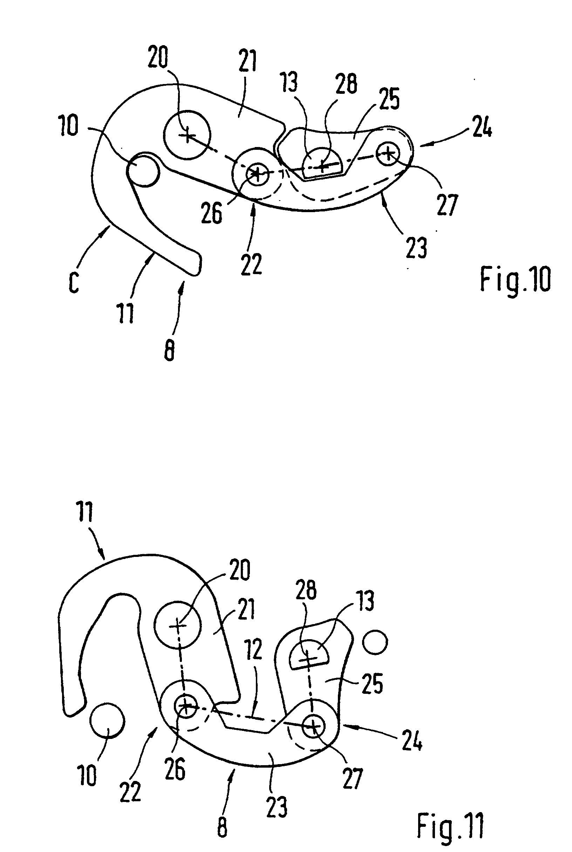

In der nach unten geklappten Öffnungsstellung F schwenkt die Verschlußbrücke 31 nach oben in eine aufrechte Stellung, wobei das vordere Ende der Verschlußbrücke 31 benachbart der Innenseite des formsteifen vorderen Verdeckabschnitts 5 verläuft (Fig. 7). Nicht näher gezeigte seitliche Anschläge am vorderen Verdeckabschnitt 5 begrenzen die Schwenkbewegung des Verschlußgriffes 32 in die Öffnungsstellung F. In der Entriegelungsstellung der Verschlußorgane 8 nehmen der Verschlußhaken 11, das Koppelglied 23 und der Lenker 25 die in Fig. 10 dargestellte Lage ein.

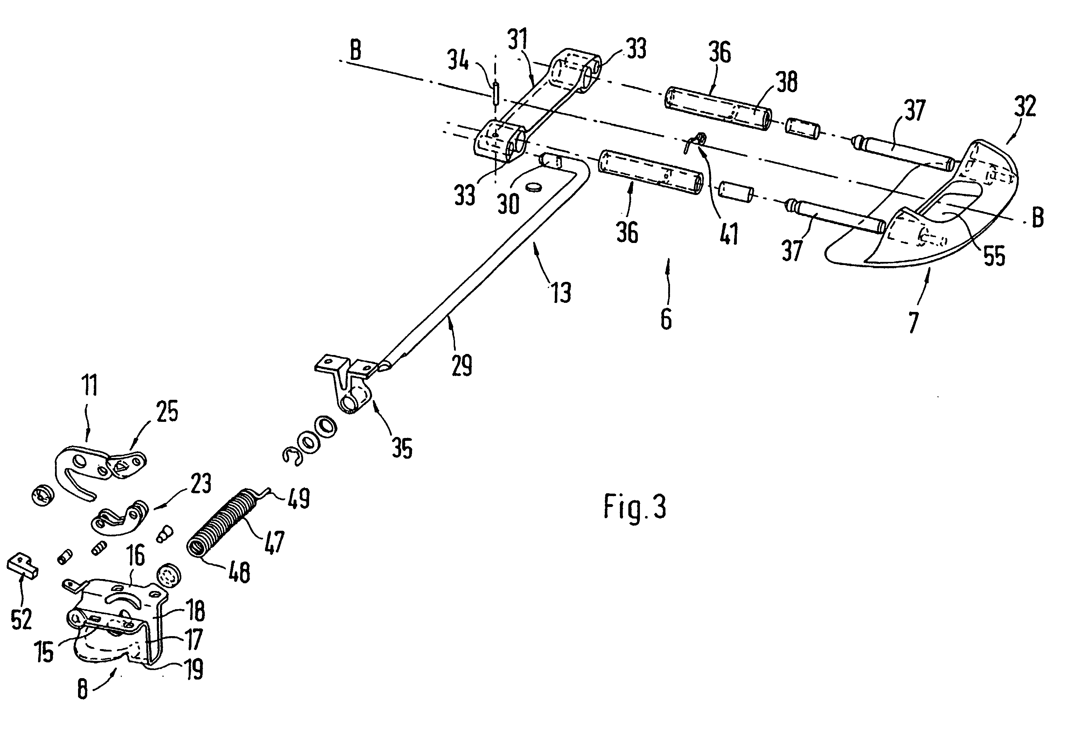

Die Information über den Verriegelungszustand erfolgt über einen am Verdeckverschlußunterteil untergebrachten Reed-Sensor 51 (Fig.12). Der dazu gehörende Magnet 52 ist am Gehäuse 14 der seitlich außenliegenden Verriegelungsorgane 8 befestigt (Fig. 3).

Zur Verbesserung der Crashsicherheit werden die fahrzeugseitigen Verdeckverschlußunterteile zu den Gehäusen 14 der Verriegelungsorgane 8 im Crashfall über eine schiefe Ebene abgestützt und hierdurch verblockt.

## Patentansprüche

1. Verriegelungseinrichtung zum Festlegen eines Verdecks an einem Windschutzscheibenrahmen eines Fahrzeuges, wobei an einem vorderen Verdeckabschnitt (5) seitlich außenliegende Verriegelungsorgane (8) vorgesehen sind, die in ihrer Verriegelungsstellung am Windschutzscheibenrahmen (3) angeordnete Aufnahmen (9) hintergreifen und von den Verriegelungsorganen zumindest ein querverlaufendes Verbindungselement (13) weggeführt ist, an dem eine mittige einen Verschlußgriff (32) aufweisende Betätigungseinrichtung angreift, **dadurch gekennzeichnet, daß** das Verbindungselement (13) durch zwei mit den Verriegelungsorganen (8) in Wirkverbindung stehende Torsionsstangen (29) gebildet wird, deren innere abgewinkelte Enden (30) mit einer zwischengeschalteten Verschlußbrücke (31) der Betätigungseinrichtung (7) kraftübertragend verbunden sind, und daß der von der Verschlußbrücke (31) aufgenommene Verschlußgriff (32) bei verriegeltem Verdeck (2) über zumindest eine Teleskopeinrichtung nach vorne in eine Ruhelage (D) verschiebbar ist.

2. Verriegelungseinrichtung nach Anspruch 1, **dadurch gekennzeichnet, daß** die abgewinkelten inneren Enden (30) der Torsionsstangen (29) etwa rechtwinkelig zur Quererstreckung der Torsionsstangen (29) ausgerichtet sind und daß in Verriegelungsstellung (C) der Verriegelungseinrichtung (6) die freien Enden der abgewinkelten Enden (30) nach vorne in Richtung Windschutzscheibenrahmen (3) zeigen.

3. Verriegelungseinrichtung nach Anspruch 1, **dadurch gekennzeichnet, daß** die abgewinkelten Enden (30) der Torsionsstangen (29) in korrespondierende zylindrische Aufnahmen (33) der Verschlußbrücke (31) eingesteckt und fest mit der Verschlußbrücke (31) verbunden sind.

4. Verriegelungseinrichtung nach einem oder mehreren der vorangegangenen Ansprüche, **dadurch gekennzeichnet, daß** jede Torsionsstange (29) an einem seitlichen außenliegenden Gehäuse (14) des Verriegelungsorganes (8) und an einem benachbart der Verschlußbrücke (31) am vorderen Dachabschnitt (5) vorgesehenen Lagerbock (35) drehbar gelagert ist.

5. Verriegelungseinrichtung nach einem oder mehreren der vorangegangenen Ansprüche, **dadurch gekennzeichnet, daß** an zumindest einer Torsionsstange (29) eine Drehfeder (47) angreift, die die Torsionsstange (29) und damit den Verschlußgriff (32) in der Weise beaufschlagt, daß der Verschlußgriff (32) selbsttätig nach Loslassen des Verschlußgriffes (32) von einer Öffnungsstellung (F) in eine Betätigungsstellung (E) zurückschwenkt.

6. Verriegelungseinrichtung nach einem oder mehreren der vorangegangenen Ansprüche, **dadurch gekennzeichnet, daß** an der Verschlußbrücke (31) zwei langgestreckte, rohrförmige Führungen (36) vorgesehen sind, in denen zylindrisch ausgebildete Griffstangen (37) des Verschlußgriffes (32) verschiebbar aufgenommen sind.

7. Verriegelungseinrichtung nach Anspruch 6, **dadurch gekennzeichnet, daß** die Führungen (36) weiter innenliegend und parallel zu den Aufnahmen (33) für die abgewinkelten Enden (30) an der Verschlußbrücke (31) ausgebildet sind, wobei die Führungen (36) die Verschlußbrücke (31) nach hinten hin überragen.

8. Verriegelungseinrichtung nach einem der Ansprüche 6 oder 7, **dadurch gekennzeichnet, daß** auf die rohrförmigen Führungen (36) örtlich Rastfedern (41) aufgesteckt sind, die die Ausziehbewegung der Griffstangen (37) des Verschlußgriffs (32) begrenzen.

9. Verriegelungseinrichtung nach einem oder mehreren der vorangegangenen Ansprüche, **dadurch gekennzeichnet, daß** am vorderen Verdeckabschnitt (5) etwa im Bereich der Fahrzeuglängsmittelebene (B-B) ein Anschlag (42) vorgesehen ist, der die Lage der Verschlußbrücke (31) in Verriegelungsstellung (C) der Verriegelungseinrichtung (6) festlegt.

10. Verriegelungseinrichtung nach einem der vorangegangenen Ansprüche, **dadurch gekennzeichnet, daß** in eingeschobener Ruhestellung (D) des Verschlußgriffes (32) die vorstehenden Griffstangen (37) des Verschlußgriffes (32) mit geringem Höhenabstand zu darüberliegenden vertikalen Stützstegen (43) des vorderen Verdeckabschnitts (5) verlaufen, wodurch eine Verschwenkbewegung des Verschlußgriffs (32) verhindert wird.

11. Verriegelungseinrichtung nach Anspruch 10, **dadurch gekennzeichnet, daß** in der eingefahrenen Ruhestellung (D) des Verschlußgriffes (32) dessen Unterseite (44) konturbündig an die vorgelagerte Kontur einer Verkleidung (45) des vorderen Verdeckabschnitts (5) angeschlossen ist.

12. Verriegelungseinrichtung nach einem der vorangegangenen Ansprüche, **dadurch gekennzeichnet, daß** jedes Verriegelungsorgan (8) einen über eine Viergelenkkinematik (12) angesteuerten Verschlußhaken (11) umfaßt.

13. Verriegelungseinrichtung nach Anspruch 12, **dadurch gekennzeichnet, daß** jede Torsionsstange (29) formschlüssig mit einem Kurbelarm (25) verbunden ist und über ein Koppelglied (23) den Verschlußhaken (11) betätigt, der um eine querverlaufende Drehachse (20) am Gehäuse (14) des Verriegelungsorganes (8) gelagert ist.

14. Verriegelungseinrichtung nach einem der Ansprüche 12 oder 13, **dadurch gekennzeichnet, daß** beim Schließen des Verdecks (2) der sich in Längsrichtung erstreckende Verschlußhaken (11) von einem konisch ausgebildeten Aufnahmebereich (54) einer am Fahrzeugseitigen Verdeckverschlußunterteil vorgesehenen Rosette (53) geführt wird und somit eine Positionierung des Verdecks in Fahrzeugquerrichtung bewirkt.

15. Verriegelungseinrichtung nach einem der vorangegangenen Ansprüche, **dadurch gekennzeichnet, daß** zur Abfrage des Zustandes der Verriegelungseinrichtung (6) ein Reed-Sensor (51) vorgesehen ist, wobei der am fahrzeugseitigen Verdeckverschlußunterteil angebrachte Reed-Sensor (51) mit einem am Verriegelungsorgan (8) befestigten Magnet (52) zusammenwirkt.

16. Verriegelungseinrichtung zum Festlegen eines Verdecks an einem Windschutzscheibenrahmen eines Fahrzeuges mit zumindest einem mit Verriegelungsorganen (8) in Wirkverbindung stehenden Verschlußgriff (32), **dadurch gekennzeichnet, daß** der Verschlußgriff (32) mit zumindest einer Teleskopiereinrichtung zusammenwirkt und durch diese von einer ausgefahrenen Betätigungsstellung (E) in eine eingefahrene Ruhestellung (D) verlagerbar ist.

## Claims

1. Locking device for securing a soft top to a windscreen frame of a vehicle, in which locking components (8) are provided laterally on the outside of a front soft-top section (5) and, in their locking position, grip behind holders (9) arranged on the windscreen frame (3), and guided away from the locking components is at least one transversely extending connecting element (13), on which a central actuating device, which has a closing handle (32), engages, **characterized in that** the connecting element (13) is formed by two torsion rods (29) which are operatively connected to the locking components (8) and the inner, angled ends (30) of which are connected in a force-transmitting manner to an interconnected closing bridge (31) of the actuating device (7), and **in that** when the soft top (2) is locked, the closing handle (32), which is held by the closing bridge (31), can be displaced forwards into an inoperative position (D) via at least one telescopic device.

2. Locking device according to Claim 1, **characterized in that** the angled, inner ends (30) of the torsion rods (29) are aligned approximately at right angles with respect to the transverse extent of the torsion rods (29), and **in that**, in the locking position (C) of the locking device (6), the free ends of the angled ends (30) point forwards in the direction of the windscreen frame (3).

3. Locking device according to Claim 1, **characterized in that** the angled ends (30) of the torsion rods (29) are inserted into corresponding, cylindrical holders (33) of the closing bridge (31) and are connected fixedly to the closing bridge (31).

4. Locking device according to one or more of the preceding claims, **characterized in that** each torsion rod (29) is mounted rotatably on a lateral, externally situated housing (14) of the locking component (8) and on a bearing block (35) provided on the front roof section (5) adjacent to the closing bridge (31).

5. Locking device according to one or more of the preceding claims, **characterized in that** a torsion spring (47) engages on at least one torsion rod (29), the said spring acting upon the torsion rod (29) and therefore on the closing handle (32) in such a manner that, after release of the closing handle (32), the closing handle (32) automatically pivots back from an opening position (F) into an actuating position (E).

6. Locking device according to one or more of the preceding claims, **characterized in that** two elongate, tubular guides (36) are provided on the closing bridge (31) and cylindrically designed gripping rods (37) of the closing handle (32) are held displaceably in them.

7. Locking device according to Claim 6, **characterized in that** the guides (36) are designed such that they are situated further inwards and parallel to the holders (33) of the angled ends (30) on the closing bridge (31), the guides (36) protruding to the rear beyond the closing bridge (31).

8. Locking device according to either of Claims 6 and 7, **characterized in that** latching springs (41) which limit the pull-out movement of the gripping rods (37) of the closing handle (32) are plugged locally onto the tubular guides (36).

9. Locking device according to one or more of the preceding claims, **characterized in that** a stop (42) is provided on the front soft-top section (5), approximately in the region of the longitudinal central plane (B-B) of the vehicle, the said stop securing the position of the closing bridge (31) in the locking position (C) of the locking device (6).

10. Locking device according to one of the preceding claims, **characterized in that** in the pushed-in inoperative position (D) of the closing handle (32) the protruding gripping rods (37) of the closing handle (32) extend with a small height clearance with respect to vertical supporting webs (43), which are situated above them, of the front soft-top section (5), as a result of which a pivoting movement of the closing handle (32) is prevented.

11. Locking device according to Claim 10, **characterized in that** in the retracted inoperative position (D) of the closing handle (32), the contour of its lower side (44) is connected flush against the established contour of a lining (45) of the front soft-top section (5).

12. Locking device according to one of the preceding claims, **characterized in that** each locking component (8) comprises a closing hook (11) which is activated via four-bar linkage kinematics (12).

13. Locking device according to Claim 12, **characterized in that** each torsion rod (29) is connected in a form-fitting manner to a crank arm (25) and uses a coupling element (23) to actuate the closing hook (11) which is mounted about a transversely extending axis of rotation (20) on the housing (14) of the locking component (8).

14. Locking device according to either of Claims 12 and 13, **characterized in that** during closure of the soft top (2) the closing hook (11), which extends in the longitudinal direction, is guided by a conically designed holding region (54) of a rosette (53), which is provided on the vehicle-side lower closing part of the soft top, and therefore brings about positioning of the soft top in the transverse direction of the vehicle.

15. Locking device according to one of the preceding claims, **characterized in that** a reed sensor (51) is provided for finding out the state of the locking device (6), the reed sensor (51), which is fitted to the vehicle-side lower closing part of the soft top, interacting with a magnet (52) fastened to the locking component (8).

16. Locking device for securing a soft top to a windscreen frame of a vehicle, having at least one closing handle (32) which is operatively connected to locking components (8), **characterized in that** the closing handle (32) interacts with at least one telescopic device and can be shifted by the latter from an extended actuating position (E) into a retracted inoperative position (D).

## Revendications

1. Dispositif de verrouillage pour la fixation d'une capote sur un cadre de pare-brise d'un véhicule, des organes de verrouillage latéralement extérieurs (8) étant prévus sur une portion de capote avant (5), lesquels viennent en prise par l'arrière dans leur position de verrouillage avec des logements (9) disposés sur le cadre de pare-brise (3) et au moins un élément de connexion (13) s'étendant transversalement partant des organes de verrouillage, un dispositif d'actionnement présentant une poignée de fermeture (32) au centre venant en prise avec cet élément de connexion, **caractérisé en ce que** l'élément de connexion (13) est formé par deux barres de torsion (29) en liaison coopérante avec les organes de verrouillage (8), dont les extrémités coudées intérieures (30) sont connectées par transmission de force à un pont de fermeture (31) du dispositif d'actionnement (7) placé entre elles, et **en ce que** la poignée de fermeture (32) reçue par le pont de fermeture (31) peut être déplacée vers l'avant dans une position de repos (D) lorsque la capote (2) est verrouillée, par le biais d'au moins un dispositif télescopique.

2. Dispositif de verrouillage selon la revendication 1, **caractérisé en ce que** les extrémités intérieures coudées (30) des barres de torsion (29) sont orientées approximativement à angle droit par rapport à l'étendue transversale des barres de torsion (29) et **en ce que** dans la position de verrouillage (C) du dispositif de verrouillage (6), les extrémités libres des extrémités coudées (30) sont tournées vers l'avant dans la direction du cadre de pare-brise (3).

3. Dispositif de verrouillage selon la revendication 1, **caractérisé en ce que** les extrémités coudées (30) des barres de torsion (29) sont enfoncées dans des logements cylindriques correspondants (33) du pont de fermeture (31) et sont connectées fermement au pont de fermeture (31).

4. Dispositif de verrouillage selon l'une ou plusieurs des revendications précédentes, **caractérisé en ce que** chaque barre de torsion (29) est montée rotative sur un boîtier latéralement extérieur (14) de l'organe de verrouillage (8) et sur un palier (35) prévu sur la portion de toit avant (5) à proximité du pont de fermeture (31).

5. Dispositif de verrouillage selon l'une ou plusieurs des revendications précédentes, **caractérisé en ce qu'**un ressort de torsion (47) vient en prise sur au moins une barre de torsion (29), lequel sollicite la barre de torsion (29) et de ce fait la poignée de fermeture (32) de telle manière que la poignée de fermeture (32) revienne automatiquement par pivotement d'une position d'ouverture (F) dans une position d'actionnement (E), après relâchement de la poignée de fermeture (32).

6. Dispositif de verrouillage selon l'une ou plusieurs des revendications précédentes, **caractérisé en ce que** deux coulisses tubulaires (36), longitudinales, sont prévues sur le pont de fermeture (31), dans lesquelles des barres de poignée de forme cylindrique (37) de la poignée de verrouillage (32) peuvent être reçues à coulissement.

7. Dispositif de verrouillage selon la revendication 6, **caractérisé en ce que** les coulisses (36) sont réalisées davantage vers l'intérieur et parallèlement aux logements (33) pour les extrémités coudées (30) sur le pont de fermeture (31), les coulisses (36) dépassant vers l'arrière du pont de fermeture (31).

8. Dispositif de verrouillage selon l'une quelconque des revendications 6 ou 7, **caractérisé en ce que** des ressorts d'encliquetage (41) sont enfilés localement sur les coulisses tubulaires (36), lesquels limitent le mouvement de sortie des barres de poignée (37) de la poignée de fermeture (32).

9. Dispositif de verrouillage selon l'une ou plusieurs des revendications précédentes, **caractérisé en ce qu'**il est prévu, sur la portion de capote avant (5), approximativement dans la région du plan médian longitudinal du véhicule (B-B), une butée (42) qui fixe la position du pont de fermeture (31) dans la position de verrouillage (C) du dispositif de verrouillage (6).

10. Dispositif de verrouillage selon l'une quelconque des revendications précédentes, **caractérisé en ce que**, dans la position de repos rétractée (D) de la poignée de fermeture (32), les barres de poignée saillantes (37) de la poignée de fermeture (32) s'étendent avec un faible espacement en hauteur par rapport aux ailes verticales (43) en regard de la portion de capote avant (5), de sorte qu'un mouvement de pivotement de la poignée de fermeture (32) soit empêché.

11. Dispositif de verrouillage selon la revendication 10, **caractérisé en ce que**, dans la position de repos rétractée (D) de la poignée de fermeture (32), sa partie inférieure (44) est raccordée, avec un contour correspondant, au contour prémonté d'un habillage intérieur (45) de la portion de capote avant (5).

12. Dispositif de verrouillage selon l'une quelconque des revendications précédentes, **caractérisé en ce que** chaque organe de verrouillage (8) comprend un crochet de fermeture (11) commandé par le biais d'une cinématique à quatre articulations (12).

13. Dispositif de verrouillage selon la revendication 12, **caractérisé en ce que** chaque barre de torsion (29) est connectée par engagement positif à un bras de manivelle (25) et actionne, par le biais d'un organe d'accouplement (23), le crochet de fermeture (11) qui est monté autour d'un axe de rotation (20) s'étendant transversalement sur le boîtier (14) de l'organe de verrouillage (8).

14. Dispositif de verrouillage selon l'une quelconque des revendications 12 ou 13, **caractérisé en ce que** lors de la fermeture de la capote (2), le crochet de fermeture (11) s'étendant dans la direction longitudinale est guidé depuis une zone de logement (54) de forme conique d'une rosette (53) prévue sur la partie inférieure de fermeture de la capote du côté du véhicule, et effectue ainsi un positionnement de la capote dans la direction transversale du véhicule.

15. Dispositif de verrouillage selon l'une quelconque des revendications précédentes, **caractérisé en ce que** pour déterminer l'état du dispositif de verrouillage (6), on prévoit un capteur reed (51), le capteur reed (51) monté sur la partie inférieure de fermeture de la capote du côté du véhicule coopérant avec un aimant (52) fixé sur un organe de verrouillage (8).

16. Dispositif de verrouillage pour fixer une capote sur un cadre de pare-brise d'un véhicule, comprenant au moins une poignée de fermeture (32) en liaison coopérante avec des organes de verrouillage (8), **caractérisé en ce que** la poignée de fermeture (32) coopère avec au moins un dispositif télescopique et peut être déplacée par celui-ci d'une position d'actionnement déployée (E) dans une position de repos rétractée (D).
